# EUROPEAN PATENT APPLICATION

(11) **EP 3 561 623 A1**
(43) Date of publication of application: **30.10.2019**
(21) Application number: 19156925.0
(22) Date of filing: 13.02.2019
(51) Int. Cl.: G05B 19/418, G05B 23/02

(54) **NETWORK MANAGEMENT DEVICE, MANAGEMENT METHOD, MANAGEMENT PROGRAM AND RECORDING MEDIUM**

(30) Priority: 26.03.2018 JP 2018058409
(71) Applicant: OMRON Corporation, Shiokoji-dori, Shimogyo-Ku Kyoto-shi Kyoto 600-8530 (JP)
(72) Inventor: IKEO, Yuji, Kyoto, 600-8530 (JP); MIHARA, Yoshihiro, Kyoto, 600-8530 (JP); SAWADA, Shigenori, Kyoto, 600-8530 (JP); SUDO, Miyuki, Kyoto, 600-8530 (JP)
(74) Representative: 2K Patentanwälte Blasberg Kewitz & Reichel

(57) **Abstract**

A network management device that supports restoration from an abnormality is provided. A management device (3) is a management device that manages a network including a master device (1) and a slave device (2) connected to the master device (1), and includes a network configuration diagram display unit (331) that displays a network configuration diagram based on design information of a network according to a design created by a user, a state information acquisition unit (321) that acquires state information relating to a state of the slave device (2), and a state display unit (332) that displays the state on the network configuration diagram in association with the slave device (2) based on the state information.

## Description

### BACKGROUND

### Technical Field

The present invention relates to a management device, a management method and a management program for managing a network including nodes such as a master device and a slave device.

### Description of Related Art

In factory automation (FA), production facilities are controlled by an industrial network system constituted by nodes such as various types of slave devices that perform data collection and control of production facilities installed within a factory and a master device that centrally manages a plurality of slave devices.

In a case where an abnormality occurs in a production line for any reason and the production line is stopped, it is necessary to identify abnormality portions and to immediately restore the production line. Examples of a technique for supporting the restoration of a production line include a technique disclosed in Patent Document 1. Patent Document 1 discloses a technique for ascertaining the position of an I/O unit in which an abnormality has occurred.

### [Literature Documents]

### [Patent Documents]

[Patent Document 1] Japanese Patent Application Laid-Open No. 2017-68324

### SUMMARY

### [Problems to be solved]

In an industrial network system within a factory, a large number of slave devices are connected to each other. It has been difficult to immediately identify true cause locations with respect to a physical problem of a network such as transitory disconnection caused by a quality abnormality of a communication cable or a connection connector, a communication abnormality due to electrical noise, or the like among abnormalities occurring in an industrial network system.

For example, a case in which transitory disconnection occurs due to the occurrence of an abnormality somewhere in a network connection between a master device and a plurality of slave devices on a production line is considered. In the case of such an abnormality, connection errors occur in all slave devices located downstream of a communication abnormality location (disconnection point), and warning lamps such as an LED indicating an abnormality of a device are turned on all at once. Each slave device inevitably reports all the content of an error as an occurring error to the master device, and thus the content of error logs reported to the master device becomes enormous. This is because, in a communication abnormality, with a certain connection error as its starting point, other types of errors also occur in each slave device due to the connection error.

In addition, in an error log, an error name and information of a node address which is an address for identifying a node are associated with each other and the content of an error is described, but it has been difficult to ascertain where on a production line a slave device having a node address which reports an error is disposed in reality.

In such a situation, it is necessary for an engineer who operates and maintains a network to restore the network from the abnormality and restore a production line quickly. However, since the content of an error log is enormous and it is difficult to ascertain where a slave device serving as a starting point of a communication abnormality among a large number of slave devices on a production line turning on warning lamps all at once is disposed in reality, it has been difficult to immediately specify true cause locations with respect to a physical problem of a network.

An object of the present invention is to provide a network management device that supports restoration from an abnormality.

### [Means to Solve Problems]

According to the present invention, there is provided a management device that manages a network including a master device and a slave device connected to the master device, the management device including: a network configuration diagram display unit that displays a network configuration diagram based on design information of the network according to a design created by a user; a state information acquisition unit that acquires state information relating to a state of the slave device; and a state display unit that displays the state on the network configuration diagram in association with the slave device based on the state information.

In addition, in the management device, it is preferable that the state information be information relating to an abnormality which is occurring, and that the state display unit display the abnormality on the network configuration diagram in association with the slave device based on information relating to the abnormality.

In addition, it is preferable that the management device further include an information display unit that displays information relating to an abnormality which is occurring in the slave device in accordance with a predetermined operation for the slave device displayed in association with the abnormality.

In addition, it is preferable that the management device further include an actual configuration information acquisition unit that acquires actual configuration information of the actual network from the master device; and a disconnection detection unit that detects information relating to disconnection of the network based on a comparison between the actual configuration information and the design information, and that the information relating to the disconnection be acquired as the state information.

In addition, in the management device, it is preferable that the network configuration diagram display unit display a position of the disconnection to be distinguishable on the network configuration diagram based on the information relating to the disconnection.

According to the present invention, there is provided a management method of managing a network including a master device and a slave device connected to the master device, the management method including: a network configuration diagram display step of displaying a network configuration diagram based on design information of the network according to a design created by a user; a state information acquisition step of acquiring state information relating to a state of the slave device; and a state display step of displaying the state on the network configuration diagram in association with the slave device based on the state information.

In addition, a management program for causing a computer to function as the management device, the program causing the computer to function as the network configuration diagram display unit, the state information acquisition unit and the state display unit, and a computer readable recording medium having the management program recorded thereon also belong to the technical scope of the present invention.

### [Effect]

According to the present invention, it is possible to provide a network management device that supports restoration from an abnormality.

### BRIEF DESCRIPTION OF THE DRAWINGS

FIG. 1 is a block diagram illustrating a schematic configuration of an industrial network system according to an embodiment of the present invention.
FIG. 2 is a block diagram illustrating a schematic configuration of a management device according to an embodiment of the present invention.
FIG. 3 is an example of a network configuration diagram.
FIG. 4 is a diagram illustrating a state in which tooltip display is performed on detailed information relating to an abnormality which is occurring in a certain node in the network configuration diagram.
FIG. 5 is a flow chart illustrating a flow of processes in a management method according to an embodiment of the present invention.
FIG. 6 is a flow chart illustrating a flow of processes in a management method according to an embodiment of the present invention.
FIG. 7 is a flow chart illustrating a flow of processes in a management method according to an embodiment of the present invention.

### DESCRIPTION OF THE EMBODIMENTS

Hereinafter, an embodiment of the present invention will be described in detail with reference to the accompanying drawings. In the following embodiment, a management device in a network system based on the standard of Ethernet for Control Automation Technology (EtherCAT; registered trademark) will be described, but a target of the present invention is not limited thereto. The present invention can be applied to any case in which a network system including one or more nodes is used.

### (Overall configuration of system)

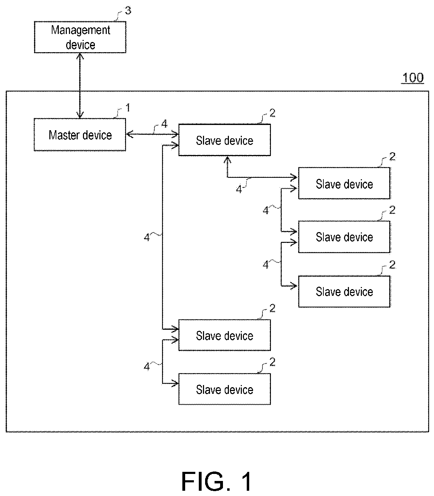

FIG. 1 is a block diagram illustrating a schematic configuration of an industrial network system 100 according to an embodiment of the present invention. The industrial network system 100 is provided with a network including a master device 1 and slave devices 2 connected to the master device 1, and a management device 3 connected to the master device 1. The master device 1 and the slave device 2 are connected to each other through a cable 4 compatible with EtherCAT communication, and the slave devices 2 are also connected to each other through cables 4 compatible with EtherCAT communication. The master device 1 and the management device 3 are connected to each other through wired or wireless Ethernet (registered trademark) communication or USB communication. Meanwhile, in the present embodiment to be illustrated, a case in which all nodes connected to the master device 1 are the slave devices 2 will be described.

The master device 1 is a device that concentratively manages the slave devices 2, and is constituted by, for example, a programmable logic controller (PLC). The master device 1 controls each of the slave devices 2 by transmitting a control command for performing sequence control to the slave device 2, and monitors the state of the slave device 2 by receiving various types of data from the slave device 2.

In addition, the master device 1 records event logs that associate occurrence times of a predetermined event (the event) and information for identifying the event in a built-in non-volatile memory every time the event occurs in the device itself,. The event in the present embodiment is classified as a system event relating to an abnormality such as communication problem or an access event occurring due to user's operations.

The slave device 2 is a device that performs data collection and control of a production facility, and performs a control operation of the production facility according to a control command from the master device 1, and the rewriting and the return of the received control command. Examples of the slave device 2 include a slave terminal, an NX unit, a CJ unit, an IO-Link device, a power supply unit, a motor unit, a counter unit, an image unit, a communication unit, an I/O unit, and the like. The slave device 2 is appropriately connected to the production facility in a wired or wireless manner. Examples of the production facility include an input device such as a sensor, a push button, or a limit switch, and an output device such as a lamp.

Similarly to the master device 1, the slave device 2 records event logs that associate occurrence times of a predetermined event and information for identifying the event in a built-in non-volatile memory every time the event occurs in the device itself.

Meanwhile, the number of slave devices 2 capable of being connected to the master device 1 and the topology are not particularly limited. In the present embodiment, up to 512 slave devices 2 can be connected to one master device 1, and any topology such as a series shape, a ring shape, a tree shape or a star shape can be applied in accordance with the conditions of linkage and wiring between the slave devices 2. In addition, a hub device may be included as a node in addition to the master device 1 and the slave devices 2.

### (Management device)

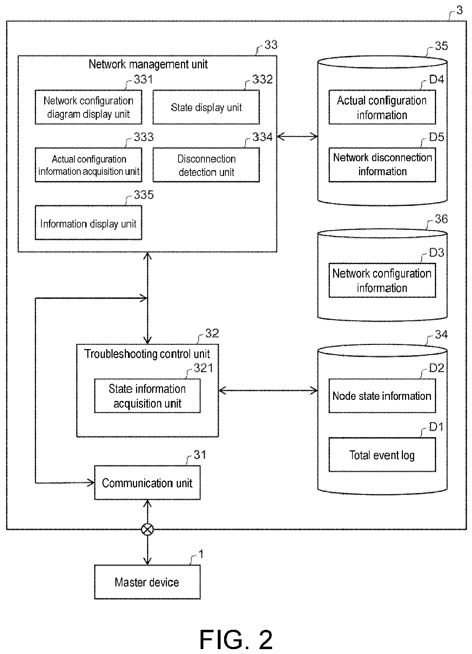

FIG. 2 is a block diagram illustrating a schematic configuration of the management device 3 according to an embodiment of the present invention. The management device 3 is a computer that manages the network of the master device 1 and the slave devices 2, and can be constituted by, for example, a general-purpose personal computer. The management device 3 includes, for example, a central processing unit (CPU), a main storage device (memory), an auxiliary storage device (such as a hard disk or an SSD), a display device and an input device (such as a keyboard or a mouse) as hardware configurations.

In addition, the management device 3 includes a communication unit 31, a troubleshooting control unit 32, a network management unit 33, a storage unit 34 for troubleshooting, and a storage unit 35 and an auxiliary storage unit 36 for network management as functional blocks. The communication unit 31, the troubleshooting control unit 32 and the network management unit 33 are realized by a management program (not shown) stored in the auxiliary storage device being read out to the main storage device and executed by the CPU. The management program may be recorded in a non-transitory computer-readable recording medium such as a CD-ROM, or the management program may be installed in the management device 3 by causing the management device 3 to read the recording medium. Alternatively, codes of the management program may be downloaded in the management device 3 through a communication network such as the Internet.

The storage unit 34 and the storage unit 35 can be set up in the main storage device. In addition, the auxiliary storage unit 36 can be set up in the auxiliary storage device.

The communication unit 31 is a communication unit for the management device 3 to perform communication with the master device 1. For example, the communication unit 31 has a function of switching a communication protocol in accordance with the master device 1, a function of transmitting and receiving relevant data such as an event log at a fixed time in order to monitor an abnormality which is occurring in a node at a fixed time, a function of performing transmission and reception processing for acquiring event logs from the respective nodes.

The troubleshooting control unit 32 has a function of supporting the resolution of various problems in the network including the master device 1 and the slave devices 2. In order to realize this function, the troubleshooting control unit 32 includes a state information acquisition unit 321.

The state information acquisition unit 321 is a functional block that acquires event logs from the respective slave devices 2 and extracts state information of each node. As described above, each slave device 2 records event logs that associate the occurrence times of events that have occurred in the devices themselves and information that identifies the events. The state information acquisition unit 321 can acquire the event logs from all the nodes connected directly or indirectly to the management device 3 by the user activating a control program and performing a predetermined operation (for example, pressing a troubleshooting button). The acquired event logs are stored in the storage unit 34 as a total event log D1. The state information acquisition unit 321 can extract information relating to the state of each node from among the stored total event log D1. The extracted information is stored in the storage unit 34 as node state information D2.

Meanwhile, the state information acquisition unit 321 may acquire all event logs recorded in the slave devices 2 in the present embodiment, but since event logs recorded in a slave terminal, an NX unit, a CJ unit and an IO-Link device are not event logs relating to a communication abnormality to be described later, the state information acquisition unit 321 may be configured not to acquire those event logs. In addition, the state information acquisition unit 321 may acquire event logs with occurrence sources of an "EtherCAT master function module" from among event logs stored in the master device 1.

The event log includes an entry, a date, a degree of importance, an occurrence source, occurrence source details, an event name and an event code. In the present embodiment, a flag of, for example, a Boolean value indicating the presence or absence of an abnormality is set in the event log itself, and whether an abnormality is occurring can be identified by the value of the flag.

The date is the occurrence time of an event in each node. In the present embodiment, the time is represented by yyyy/mm/dd and hh:mm:ss, but the display mode of the occurrence time is not limited thereto. The entry, the degree of importance, the occurrence source, the occurrence source details, the event name and the event code are information that identifies an event. Specifically, the entry is I/O data allocated to I/O entry mapping. The degree of importance is information indicating the degree of importance of an event detected by each node. As the degree of importance becomes higher, the influence on a system becomes larger, and the degree of urgency of restoration also becomes higher. An example of information of the degree of importance includes, for example, an all stop fault, a partial stop fault, a minor fault, and the like in a descending order. The occurrence source is information indicating a node that has detected the occurrence of an event, and information such as, for example, EtherCAT or Ethernet according to the connection type of the node. The occurrence source details are information (such as a node address) for identifying a node in which an event has occurred. The event name is the kind of event. The event code is a code which is allocated to an event of a node in advance by a system in accordance with the kind of event, and is represented by eight hexadecimal digits. Meanwhile, the information for identifying an event is not limited thereto.

The network management unit 33 has a function of supporting the state management of a network by a user. In order to realize this function, the network management unit 33 includes a network configuration diagram display unit 331, a state display unit 332, an actual configuration information acquisition unit 333, a disconnection detection unit 334 and an information display unit 335.

Meanwhile, in the present embodiment, network configuration information D3 indicating a network configuration according to a design created by a user is stored in the auxiliary storage unit 36 of the management device 3 in advance as a project file.

Profile information, slave connection information, address information, or the like of each slave device 2 constituting the network system 100 is described in the network configuration information D3. The profile information is information for identifying the model of the slave device 2, and includes, for example, the product code, vendor ID, revision number, and the like of the slave device. The slave connection information is information for understanding the connection configuration (topology) of the slave device, and includes, for example, a device which is a connection destination of the slave device, information for identifying a port, and the like. The address information is information indicating the value of a node address allocated to a slave device.

Meanwhile, a slave information file in which unique information for each model of a slave device is described can also be stored in the auxiliary storage unit 36 in addition to such network configuration information. An example of the slave information file includes information such as a product code, a vendor ID, a revision number, the number of ports, the type of port, or the like.

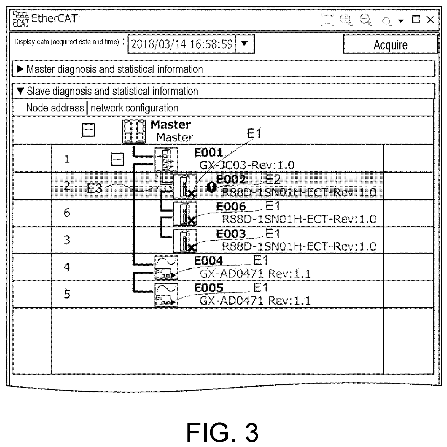

The network configuration diagram display unit 331 is a functional block that displays a network configuration diagram indicating a connection relationship between nodes. The network configuration diagram display unit 331 graphically displays a network configuration diagram illustrated in FIG. 3 with reference to the network configuration information D3 stored in the auxiliary storage unit 36. In the network configuration diagram, nodes included in a network are represented by icons, and these icons are displayed in a tree structure. In addition, a node address and the model name of a node are displayed in the vicinity of each icon. Meanwhile, a specific display mode of the network configuration diagram is not limited thereto, and may be any mode insofar as a user can intuitively ascertain the network configuration.

For example, in the network configuration diagram illustrated in FIG. 3, an icon E1 indicating the state of a node is displayed in the vicinity of each node of node addresses E002 to E006. In the illustrated mode, an icon indicating that a normal operation is being performed is displayed in the nodes of the node addresses E004 and E005, and an icon indicating that some kind of abnormality is occurring is displayed in the nodes of the node addresses E002, E006, and E003. Further, an icon E2 indicating an abnormality which is occurring is displayed in the vicinity of the node of the node address E002, and a connection line E3 between the node E002 and the node E001 is displayed so that a disconnected state can be identified. Meanwhile, in the mode illustrated in FIG. 3, the icon E2 is an icon indicating a partial stop fault.

Thereby, a user can easily ascertain the state of a node depending on a difference in the kind of icon E1 that is displayed. In addition, a user can easily ascertain that an abnormality is occurring in the node in which the icon E2 is displayed. In addition, a user can easily ascertain a disconnected state due to a breakdown in communication at the position of the connection line E3. A communication breakdown position is a point having a high degree of priority in restoration from physical trouble in a network. The communication breakdown position is graphically displayed in the network configuration diagram, and thus the identification of a cause location is also facilitated.

Meanwhile, on the network configuration diagram, a mode for displaying the state of a node, a mode for displaying an abnormality which is occurring, and a mode for displaying a disconnected state are not limited to the above. For example, a mode of blinking or highlighting a corresponding icon or a connection line can be applied.

The state display unit 332 is a functional block that displays information relating to the state of each node on the network configuration diagram in association with each node. The information relating to the state of each node is the node state information D2. In the present embodiment, the information is extracted by the state information acquisition unit 321 and is stored in the storage unit 34. As a display mode, for example, an icon is displayed in the vicinity of an icon of a corresponding node. The kind of icon can be changed in accordance with the content or degree of a state.

The actual configuration information acquisition unit 333 is a functional block that acquires information (actual configuration information) of a network configuration of actual devices. In the present embodiment, in the industrial network system 100 which is actually constructed, the master device 1 performs a network scan process to thereby collect information of each slave device 2 and generate actual configuration information. The actual configuration information acquisition unit 333 receives this actual configuration information from the master device 1, and reads out the information into the storage unit 35 as actual configuration information D4 shown in FIG. 2.

The format of the actual configuration information D4 corresponds to the format of the network configuration information D3. The network configuration information D3 is information according to a design created by a user, whereas the actual configuration information D4 is generated based on information actually collected from each slave device 2 by the master device 1 in the industrial network system 100 which is actually constructed, the information D3 being different from the information D4 in the above point.

The network scan process is executed through, for example, the following four steps. In the process of each of the following steps, a network of an EtherCAT standard will be described as an example.

In the first step, the master device 1 discerns the number of slave devices 2 (the number of nodes) which are connected to the master device 1. In order to discern the number of nodes, the master device 1 issues a broadcast command (BRD) to a network. The number of responses to the broadcast command is equivalent to the number of nodes which are connected to the master device 1. For example, in the EtherCAT standard, it is specified that all nodes (all EtherCAT slaves) which are present within a network respond to the broadcast command.

In the second step, the master device 1 acquires information of a node address and information of a communication port in which connection is established in each node from each node in a network. In order to acquire information, the master device 1 issues an auto increment physical read (APRD) command to each node.

For example, in the EtherCAT standard, it is specified that the number of communication ports of a node is up to four, a node holds the state of each communication port in a prescribed register, and a node holds a node address in a prescribed register. The APRD command is a command used in readout of a register in the EtherCAT standard. The readout is performed by specifying a node at a position address (an address indicating the number of connections counted from the master device 1).

In the third step, the master device 1 creates topology of a network based on information of a communication port acquired in the second step and a rule of a packet circulation order.

For example, in the EtherCAT standard, it is specified that the IN communication port of a node is a zeroth port. In addition, it is specified that the order in which packets circulate through communication ports is the order of a zeroth port, a third port, a first port and a second port.

In the fourth step, the master device 1 acquires information for identifying the model of a node from each node in a network. In order to acquire information, the master device 1 issues the APRD command to each node.

For example, in the EtherCAT standard, it is specified that a node holds a vendor ID, a product code, and a revision code in a register as information for identifying a model.

The network scan process is performed through the above four steps, and the actual configuration information D4 of a network is generated.

The disconnection detection unit 334 is a functional block that detects the disconnection position of a network by comparing the network configuration information D3 according to a design with the actual configuration information D4 of an actual device. The detection result is stored in the storage unit 35 as network disconnection information D5 shown in FIG. 2.

Meanwhile, the slave device 2 may be temporarily removed (separated) from a network for a reason such as, for example, maintenance. When returning from maintenance, the slave device 2 can rejoin the network. In the present embodiment, disconnection caused by such temporary separation can be processed without being determined as disconnection. Information of the slave device 2 that is separated can be left in the actual configuration information D4 in a state where it is connected to the network.

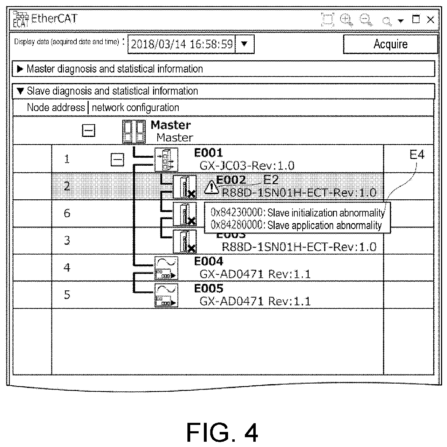

The information display unit 335 is a functional block that displays information relating to an event having occurred in a node identifiably displayed on the network configuration diagram in accordance with a predetermined operation for the node. For example, as illustrated in FIG. 4, in a case where a mouse-over operation is performed on the icon of the node of the node address E002 at which the icon E2 indicating an abnormality which is occurring is displayed, the information display unit 335 acquires an event log of a node corresponding to the icon on which the mouse-over operation is performed from all event logs D1, and displays detailed information (a list of event codes and event names) relating to an abnormality which is occurring in the node in a tooltip as shown by reference numeral E4. Thereby, a user can ascertain what abnormality is occurring in each node through a simple operation. Therefore, analysis work for an abnormality which is occurring in a node is further facilitated. Meanwhile, in the mode illustrated in FIG. 4, the icon E2 is an icon indicating a minor fault.

Meanwhile, a predetermined operation for a node is not particularly limited in the case of an operation for selecting a desired node, and may be, for example, a click, a tap or the like with respect to a node.

### (Management method)

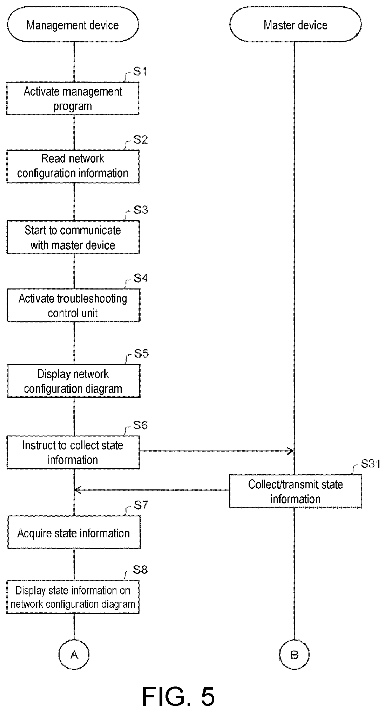

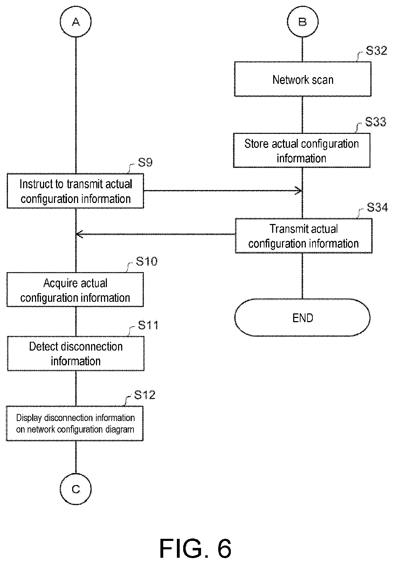

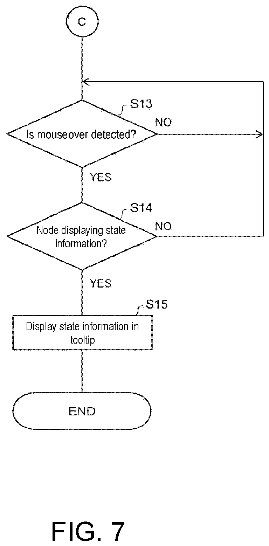

FIGS. 5 to 7 are flow charts illustrating a flow of processes in a management method of managing a network including the master device 1 and the slave device 2. In the drawings, procedures in the management device 3 and the master device 1 are shown.

First, in a case where a user activates a management program in the management device 3 and opens a project file (S1), the network management unit 33 is activated, and the network configuration diagram display unit 331 reads out the network configuration information D3 stored in the auxiliary storage unit 36 into the storage unit 35 (S2). Subsequently, in a case where the user presses an online button (not shown) on the screen of the management program, the communication unit 31 starts to communicate with the master device 1 (S3).

Subsequently, in the management device 3, in a case where the user presses a troubleshooting button (not shown) on the screen of the management program, the troubleshooting control unit 32 is activated (S4). Thereafter, the network configuration diagram display unit 331 displays a network configuration diagram based on the network configuration information D3 (S5).

Thereafter, the state information acquisition unit 321 instructs the master device 1 and each slave device 2 to collect state information (S6). In response thereto, the master device 1 and each slave device 2 transmit an event log recorded in the device itself to the management device 3 (S31). Thereby, the state information acquisition unit 321 acquires all event logs D1 relating to each node (each slave device 2) and the master device 1 and stores the acquired event logs in the storage unit 34. Further, the state information acquisition unit 321 extracts information relating to the state of each node from among the acquired all event logs D1, and stores the extracted information in the storage unit 34 as the node state information D2 (S7).

Thereafter, the state display unit 332 associates the information relating to the state of each node with each node based on the node state information D2, and displays the result on the network configuration diagram (S8).

In the network configuration diagram illustrated in FIG. 3, the icon E1 indicating the state of a node is displayed. In addition, the icon E2 indicating an abnormality which is occurring is displayed in the network configuration diagram. A user can easily ascertain the state of a node depending on a difference in the kind of icon E1 to be displayed.

On the other hand, in the master device 1, a network scan process is performed (S32), whereby it is possible to collect information of each slave device 2, and to store actual configuration information in the device itself (S33). Meanwhile, the processes of S32 and S33 can also be performed at any timing.

Subsequently, the actual configuration information acquisition unit 333 instructs the master device 1 to transmit the actual configuration information (S9). In response thereto, the master device 1 transmits the actual configuration information stored in a host device to the management device 3 (S34). Thereby, the actual configuration information acquisition unit 333 acquires the actual configuration information D4 and stores the acquired information in the storage unit 35 (S10).

Thereafter, the disconnection detection unit 334 extracts the information D5 relating to disconnection of a network by comparing the network configuration information D3 with the actual configuration information D4, and stores the extracted information in the storage unit 35 as the network disconnection information D5 (S11). The network configuration diagram display unit 331 identifiably displays the position of disconnection on the network configuration diagram based on the network disconnection information D5 (S12).

In the network configuration diagram illustrated in FIG. 3, it is identifiably displayed that the connection line E3 is in a disconnected state. Thereby, a user can easily ascertain a disconnected state due to a breakdown in communication at the position of the connection line E3.

Further, in a case where a mouse-over operation is performed on the icon of a node in which the state information is associatively displayed (YES in S13 and S14), the information display unit 335 acquires an event log of a node corresponding to the icon on which the mouse-over operation is performed, and displays detailed information relating to an abnormality which is occurring in the node in a tooltip (S15).

Thereby, a user can ascertain what abnormality is occurring in each node through a simple operation. Therefore, analysis work for an abnormality which is occurring in a node is further facilitated.

### (Supplement)

Hereinbefore, the embodiment of the present invention has been described, but the present invention is not limited to the embodiment, and can be variously changed and modified. For example, a form obtained by appropriately combining technical means disclosed in the embodiment also belongs to an aspect of the present invention.

In the embodiment, a network configuration diagram is displayed based on the network configuration information D3 stored in the auxiliary storage unit 36 of the management device 3, but the present invention is not limited thereto. For example, network configuration information stored in the master device 1 may be acquired, and a network configuration diagram may be displayed based on the acquired network configuration information.

In the embodiment, a target for the information display unit 335 to perform tooltip display through a mouse-over operation is the icon E2 indicating a minor fault, but an icon of the target for performing tooltip display is not limited thereto. The type of icon E2 for performing tooltip display is not limited to an icon indicating a minor fault, and tooltip display may be performed in a case where a mouse-over operation is performed on an icon indicating the all stop fault or the partial stop fault with a higher degree of importance.

### [Reference Signs List]

1 Master device
2 Slave device
3 Management device
4 Cable
31 Communication unit
32 Troubleshooting control unit
321 State information acquisition unit
33 Network management unit
331 Network configuration diagram display unit
332 State display unit
333 Actual configuration information acquisition unit
334 Disconnection detection unit
335 Information display unit
34 Storage unit
35 Storage unit
36 Auxiliary storage unit
100 Industrial network system
D1 Total event log
D2 Node state information
D3 Network configuration information
D4 Actual configuration information
D5 Network disconnection information

## Claims

1. A management device (3) that manages a network comprising a master device (1) and a slave device (2) connected to the master device (1), **characterized in that** the management device (3) comprises:
a network configuration diagram display unit (331) that displays a network configuration diagram based on design information of the network according to a design created by a user;
a state information acquisition unit (321) that acquires state information relating to a state of the slave device (2); and
a state display unit (332) that displays the state on the network configuration diagram in association with the slave device (2) based on the state information.

2. The management device (3) according to claim 1,
wherein the state information is information relating to an abnormality which is occurring, and
the state display unit (332) displays the abnormality on the network configuration diagram in association with the slave device (2) based on information relating to the abnormality.

3. The management device (3) according to claim 2, further comprising:
an information display unit (335) that displays information relating to an abnormality which is occurring in the slave device (2) in accordance with a predetermined operation for the slave device (2) displayed in association with the abnormality.

4. The management device (3) according to any of claims 1 to 3, further comprising:
an actual configuration information acquisition unit (333) that acquires actual configuration information of the network from the master device (1); and
a disconnection detection unit (334) that detects information relating to disconnection of the network based on a comparison between the actual configuration information and the design information,
wherein the information relating to the disconnection is acquired as the state information.

5. The management device (3) according to claim 4,
wherein the network configuration diagram display unit (331) displays a position of the disconnection to be distinguishable on the network configuration diagram based on the information relating to the disconnection.

6. A management method of managing a network comprising a master device (1) and a slave device (2) connected to the master device (1), **characterized in that**, the management method comprises:
a network configuration diagram display step of displaying a network configuration diagram based on design information of the network according to a design created by a user;
a state information acquisition step of acquiring state information relating to a state of the slave device (2); and
a state display step of displaying the state on the network configuration diagram in association with the slave device (2) based on the state information.

7. A management program, **characterized in that** the management program causes a computer to function as the management device (3) according to claim 1, and causes the computer to function as the network configuration diagram display unit (331), the state information acquisition unit (321) and the state display unit (332).

8. A non-transitory computer readable recording medium, **characterized in that**, the recording medium records the management program according to claim 7.
